# EUROPEAN PATENT APPLICATION

(11) **EP 1 484 625 A1**
(43) Date of publication of application: **08.12.2004**
(21) Application number: 03253545.2
(22) Date of filing: 04.06.2003
(51) Int. Cl.: G02B 6/42, G02B 6/293

(54) **Optical device for coupling light of a laser array into an optical fibre**

(71) Applicant: Agilent Technologies, Palo Alto, CA 94303-0870 (US)
(72) Inventor: Plumb, Richard Gordon Samuel, Ipswich IP1 5PB (GB)
(74) Representative: Coker, David Graeme

(57) **Abstract**

It is known to use wavelength insensitive devices, for example, so-called Y-couplers, to couple light from an array of laser device to an optical fibre. However, such wavelength insensitive devices are energy inefficient, resulting in relatively large losses of power. The present invention overcomes this disadvantage by providing a device (100) comprising an array of tunable laser devices (102) and a wavelength selective device (124, 200, 302, 400). The wavelength selective device (124, 200, 302, 400) is capable of causing incident light to be directed to a target surface area (122) with relatively minimal losses.

## Description

The present invention relates to a light generation and coupling device of the type used, for example, to generate coherent light of a predetermined wavelength and couple the generated light to a target surface area, such as an input of an optical device or element, such as a core of an optical fibre. The present invention also relates to a method of generating the light of the predetermined wavelength and coupling the generated light to the input of the optical device or element.

In an optical communications system requiring a large number of optical sources, for example, a Dense Wavelength Division Multiplexing (DWDM) system, it is known to provide an array of laser devices coupled to a single optical fibre by a number of passive, wavelength insensitive, "Y" junction or a, wavelength insensitive, Multi-Mode Interface (MMI) type coupler. However, even if the "Y" junction or the MMI type coupler is a perfect coupler, an inevitable loss of optical energy occurs due to the so-called Law of Equal Brightness (Principles of Optics, Born & Wolf, page 189). As a result of this law, the inevitable loss in the coupler is proportional to the number of laser devices constituting the array of laser devices. For example, a 4-device array has an associated 6dB loss and an 8-device array has an associated 9dB loss. In addition, waveguides and couplers employed to ensure that the light generated by the array of laser device is launched efficiently into the optical fibre typically add another 6 to 10dB loss. The above-mentioned losses result in around 0.02 mW of optical power being coupled to the optical fibre from 1 mW of optical power emitted by a given laser element, when in use, of the array of laser devices. Therefore, to achieve high output power, an optical amplifier is consequently required. The provision of the optical amplifier increases the costs, complexity and bulk of the overall light generation and coupling system, and where a semiconductor optical amplifier is employed (rather than a more expensive erbium doped fibre amplifier), a further loss in performance occurs. Also, where the number of laser devices is large, for example, twenty, the manufacturing yield of the array of lasers, as a single monolithic device, is relatively low.

Other known solutions employing arrays of laser devices suffer from a number of other disadvantages, such as sensitivity to dust and/or vibration.

An alternative system comprises a single tunable laser device having a relatively wide tuning range covering substantially the same range of wavelengths covered by the array of laser devices mentioned above. However, fabrication of a single laser device covering such a wide range of wavelengths is not without complications. Indeed, manufacture of such laser devices is difficult as this structure is complex and consequently expensive. Additionally, the single tunable laser device is large, by laser chip standards, and manufacturing yields are relatively low.

According to a first aspect of the present invention, there is provided an optoelectronic device for generating and coupling light to a target surface area, the device comprising: a laser device of an array of tunable laser devices, the laser device being arranged to generate light of a predetermined wavelength; characterised by: a wavelength selective device for directing the light of the predetermined wavelength generated by the laser device to the target surface area.

The device may further comprise: a first optical element for collimating the light generated by the laser device, the first optical element being disposed between the laser device and the wavelength selective device; and a second optical element arranged to focus light propagating from the wavelength selective device at the target surface area.

The first and second optical elements may be lenses. The wavelength selective device may be a diffraction grating. The diffraction grating may be concave. The wavelength selective device may be a holographic micro-lens array.

According to a second aspect of the present invention, there is provided an optoelectronic device for generating and coupling light to a target surface area, the device comprising: a laser device of an array of tunable laser devices, the laser device being arranged to generate light of a predetermined wavelength; and a reflective device for directing the light of the predetermined wavelength generated by the laser device to the target surface area; characterised in that the laser device is electronically tunable.

The device may further comprise a first optical element for focussing the light generated by the laser device, the first optical element being disposed between the laser device and the reflective device; and a second optical element arranged to focus light propagating from the reflective device at the target surface area.

According to a third aspect of the present invention, there is provided a method of generating and coupling light to a target surface area, the method comprising the steps of: providing an array of tunable laser devices, at least one of the tunable laser devices of the array of tunable laser devices generating light of a predetermined wavelength; characterised by: wavelength selectively directing the light of the predetermined wavelength generated by the at least one tunable laser device to the target surface area.

According to a fourth aspect of the present invention, there is provided a method of generating and coupling light to a target surface area, the method comprising the steps of: providing an array of tunable laser devices, at least one of the tunable laser devices of the array of tunable laser devices generating light of a predetermined wavelength; and directing the light of the predetermined wavelength generated by the at least one tunable laser device to the target surface area; characterised by: electronically tuning the at least one tunable laser device.

It is thus possible to provide a light generation and coupling device, and a method of generating and coupling light, having, relatively speaking, lossless coupling of light by, fixed, wavelength selective devices. Consequently, it is possible to couple light of about 1500nm ± 40nm into the optical fibre, the light having a power of at least 5mW for a realistic laser chip output of 10 to 20 mW. In some embodiments, comparable levels of coupling can also be achieved using moving wavelength selective devices, for example, rotating mirrors and powers of between 10 and 20mW can be achieved. The use of rotating mirrors requiring only a few degrees of rotational movement enables the use of flexible mountings as opposed to precision bearings.

The provision of lower losses than existing known solutions permits direct laser modulation in many applications with a relatively simple structure. In at least one embodiment, the manufacture of the device as a monolithic device requires fewer components than non-monolithic devices, because the concave coarse diffraction grating is used to focus the light output from the laser devices to the optical fibre. The increase in power that can be launched into the optical fibre obviates, or at least mitigates, the need for an optical amplifier, an MMI coupler or waveguides. Further, the cost of producing the device is lower than the cost of producing existing such devices, but the manufacturing yields are higher. Additionally, the first and third aspects of the present invention are not susceptible to dust or vibration. Use of a holographic microlens array in some embodiments affords advantages of simplicity and relative inexpense. Where electronic tuning of the array of laser devices is employed, operation of the device is possible up to 85°C with only a single element Peltier cooler to maintain the temperature of the device.

At least one embodiment of the invention will now be described, by way of example only, with reference to the accompanying drawings, in which:
**Figure 1** is a schematic diagram of a first device constituting a first embodiment of the invention;
**Figure 2** is a schematic diagram of a second device constituting a second embodiment of the invention;
**Figure 3** is a schematic diagram of a third device constituting a third embodiment of the invention; and
**Figure 4** is a schematic diagram of a fourth device constituting a fourth embodiment of the invention.

Throughout the following description, identical reference numerals will be used to identify like parts.

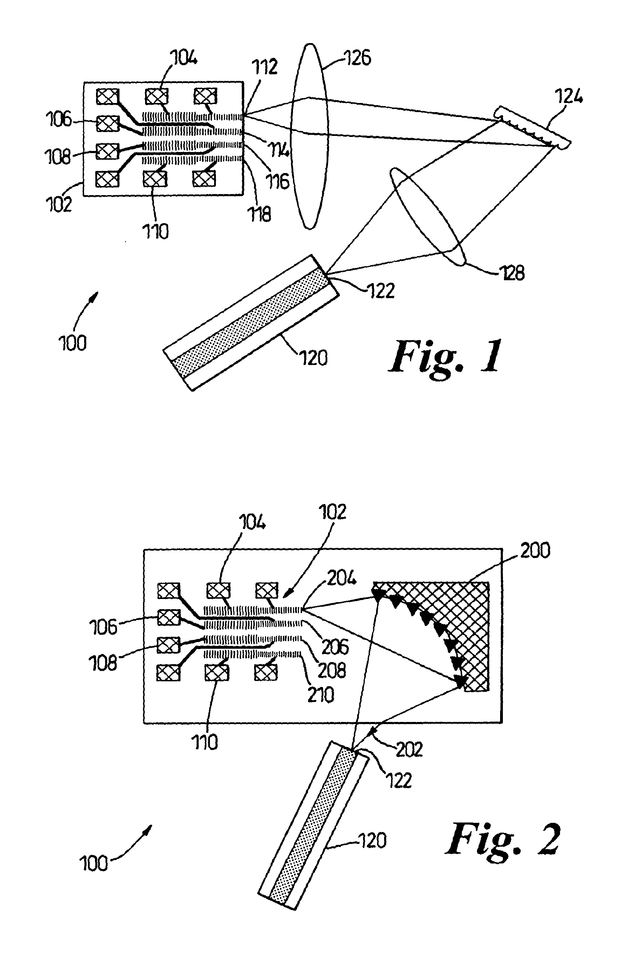

Referring to Figure 1, a light generation and coupling device 100 comprises an array of tunable laser devices 102 comprises a first tunable laser device 104, a second tunable laser device 106, a third tunable laser device 108 and a fourth tunable laser device 110. In this example, each laser device is an electronically tunable Distributed FeedBack (DFB) laser device, having two electrical contacts: one to control optical gain and one to tune the grating (not shown) of the laser device via carrier injection. A common "return" contact is also provided. Each of the first, second, third and fourth laser devices is capable of tuning over a, about, 15 nm range of wavelengths. However, any suitable known array of tunable lasers can be employed. The array of tunable laser devices 102 also comprises a first output port 112, a second output port 114, a third output port 116 and a fourth output port 118 corresponding to the first, second, third and fourth tunable laser devices 104, 106, 108, 110 respectively.

An output port (not shown) of the device 100 is arranged to receive an optical fibre 120, a diffraction grating 122 being disposed in an optical path between the array of tunable laser devices 102 and the output port of the device 100. The diffraction grating 122 is small, for example, 0.25 mm across, and has a correspondingly coarse resolution of, for example, at least 150 lines. Optionally, the diffraction grating 122 can be chirped. The position of the grating relative to the output ports of 112, 114, 116, 118 of the array of laser devices and the output port of the device 100 is important in order to ensure that, in this example, light at the central wavelength of each of the first, second, third and fourth laser devices 104, 106, 108, 110 is directed, with the assistance of a lens (described below), to a substantially same target surface area 122, preferably a central area of the core of the optical fibre 120.

A first lens 124 is disposed at a suitable distance from the array of tunable laser devices 102 between the array 102 and the diffraction grating 122. A second lens 126 is disposed between the diffraction grating 122 and the output port of the device 100 at a suitable distance from the diffraction grating 122.

In operation, one of the first, second, third or fourth tunable laser devices 104, 106, 108, 110 is activated and tuned to emit light of a predetermined wavelength λ. Of course, if required, more than one of the first, second, third or fourth tunable laser devices 104, 106, 108, 110 can be activated and tuned to respective predetermined wavelengths. The light of the (one or more) predetermined wavelength is then collimated by the first lens 126 and is incident upon the diffraction grating 124, whereupon a proportion of the light of the predetermined wavelength λ is reflected so that the light of the predetermined wavelength λ, in accordance with the properties of the diffraction grating 124, and propagates onwards through the second lens 128. The second lens 128 focuses the reflected light of the predetermined wavelength λ onto the target surface area 122, thereby causing the light of the predetermined wavelength λ to be coupled to the target surface area 122. Consequently, the light of the predetermined wavelength λ can be launched into the optical fibre 120.

Although, in this example, the diffraction grating 122 is employed, it should be appreciated that other suitable wavelength selective devices can be used as will become clear from the following two examples.

Referring to Figure 2, the device 100 is formed as a monolithic device comprising the array of tunable laser devices 102. As described above, the array of tunable laser devices 102 comprises the first, second, third and fourth laser devices 104, 106, 108, 110 coupled to first, second, third and fourth waveguides 204, 206, 208, 210 respectively. In this example, the wavelength selective device is a concave diffraction grating 200 disposed adjacent the array 102 and an output port 202, the optical fibre 120 being disposed so as to face an output port 202. Again, the concave diffraction grating 200 can be chirped. In common with the above example, the position of the concave diffraction grating 200 relative to the first, second, third and fourth waveguides 204, 206, 208, 210 and the output port 202 of the device 100 is important in order to ensure that the light at the central wavelength of each of the first, second, third and fourth laser devices 104, 106, 108, 110 is directed to the substantially same target surface area 122, in this example on the core of the optical fibre 120. Also, the radius of curvature of the concave diffraction grating 200 needs to be appropriately selected for the same reason.

In operation, one of the first, second, third or fourth tunable laser devices 104, 106, 108, 110 is activated and tuned to emit light of a predetermined wavelength λ. Again, if required, more than one of the first, second, third or fourth tunable laser devices 104, 106, 108, 110 can be activated and tuned to respective predetermined wavelengths. The light of the (one or more) predetermined wavelength λ propagates through a bulk optical medium to the concave diffraction grating 200, whereupon the light of the predetermined wavelength λ is focussed and reflected to the output port 202, thereby causing the light of the predetermined wavelength λ to be coupled to the target surface area 122. Consequently, the light of the predetermined wavelength λ can be launched into the optical fibre 120. The bulk optical medium can be any suitable material or layers of material, for example: GaAs/GaAIAs, a glass stack, or a plastic stack.

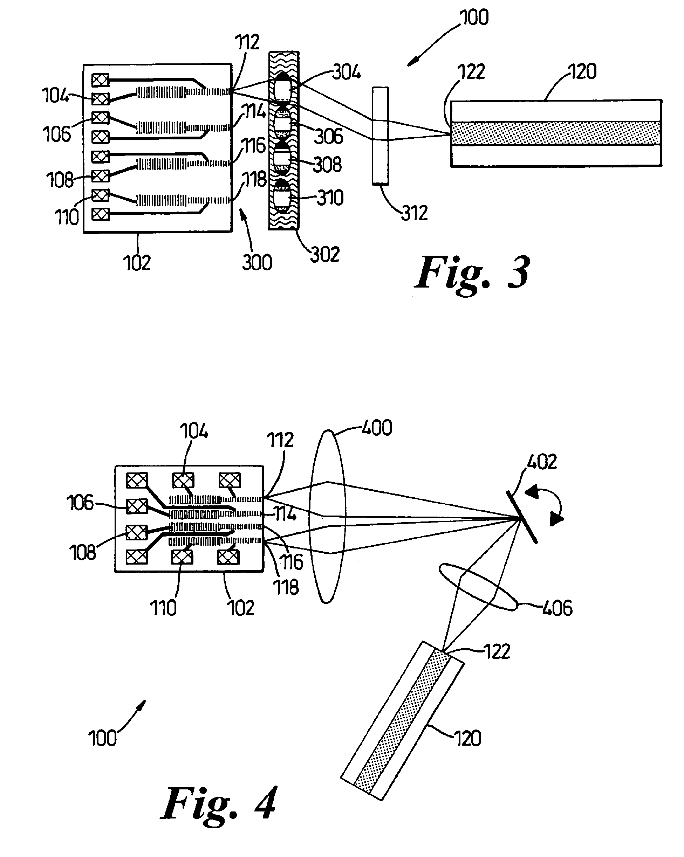

Referring to Figure 3, the device 100 comprises the array of tunable laser devices 102. As in the example of Figure 1, the array of tunable laser devices 102 comprises the first, second, third and fourth tunable laser devices 104, 106, 108, 110, each respectively coupled to the first, second, third and fourth output ports 112, 114, 116, 118 constituting an array of output ports 300.

A first lens array, for example a holographic microlens array 302 is disposed adjacent the array of output ports 300. In this example, the microlens array 302 comprises a first holographic microlens 304, a second holographic microlens 306, a third holographic microlens 308, and a fourth holographic microlens 310 aligned adjacent the first, second, third and fourth output ports 112, 114, 116, 118, respectively. A second, holographic, lens 312 is disposed opposite the microlens array 302 at a first appropriate focal distance, and the optical fibre 120, having the target surface area 122, is disposed opposite the second at a second appropriate focal distance.

In operation, one of the first, second, third or fourth tunable laser devices 104, 106, 108, 110 is activated and tuned to emit light of a predetermined wavelength λ. Of course, if required, more than one of the first, second, third or fourth tunable laser devices 104, 106, 108, 110 can be activated and tuned to respective predetermined wavelengths. Depending upon the exact wavelength of light required, the first, second, third or fourth tunable laser device 104, 106, 108, 110 will be activated according to which of the first, second, third, or fourth tunable laser devices 104, 106, 108, 110 is capable of emitting the light of the (one or more) predetermined wavelength λ.

Accordingly, the light of the predetermined wavelength λ leaves the array of tunable laser devices 102 from one (or more) of the first, second, third or fourth output ports 112, 114, 116, 118, and propagates to one of the respective first, second, third or fourth microlenses 304, 306, 308, 310. Propagation of the light of the predetermined wavelength λ through one of the holographic microlenses 304, 306, 308, 310 results in the light of the predetermined wavelength λ being focussed to a spatially coincident region of the second lens 312, the second lens 312 focussing the light of the predetermined wavelength λ onto the target surface area 122, in this example an incidence surface of the core of optical fibre 120. Consequently, the light of the predetermined wavelength λ is launched into the optical fibre 120, the use of the second holographic lens 312 mitigating losses attributed to the Law of Equal Brightness.

In another embodiment (Figure 4), a first focussing lens 400 is disposed adjacent the array of tunable laser devices 102. The focussing lens 400 has, in this example, a wide field of view and comprises a broadband coating. A rotating mirror unit 402 is disposed and aligned at a suitable position from the first focussing lens 400 relative to both the array of tunable laser devices 102 and the optical fibre 120 having the target surface area 122. A second focussing lens 406 is disposed between the rotating mirror unit 402 and the target surface area 122 at an appropriate distance from the rotating mirror unit 402. The second focussing lens 406 is capable of transforming the optical beam generated by the first, second, third or fourth tunable laser device 104, 106, 108, 110 to match the acceptance angle of the optical fibre 120.

Whilst this example has described the use of the rotating mirror unit 402, other switching devices can be employed, for example a Micro-Electro Mechanical System (MEMS) switch, such as a low-loss 1x4 optical switch employing linear motion, or a waveguide electro-optic switch or a thermo-optic switch.

In operation, light of a predetermined wavelength λ is emitted from one of the first, second, third or fourth output ports, 112, 114, 116, 118 and focussed by the first focussing lens 400 to the rotating mirror 402. By monitoring a control unit (not shown) of the array of laser devices 102, the rotating mirror unit 402 is controlled so as to rotate a mirror of the rotating mirror unit 402 by an appropriate angle about an axis of rotation (not shown) thereof, thereby reflecting the light of the predetermined wavelength λ to the target surface area 122. The light of the predetermined wavelength λ is, consequently, launched into the optical fibre 120.

It should be appreciated that references to "light" herein refer to electromagnetic radiation of wavelengths between about 300nm and about 10µm, preferably between about 400nm and about 2µm, and very preferably between about 800nm and about 1700nm.

## Claims

1. An optoelectronic device (100) for generating and coupling light to a target surface area (122), the device comprising:
a laser device (104, 106, 108, 110) of an array of tunable laser devices (102), the laser device (104, 106, 108, 110) being arranged to generate light of a predetermined wavelength; **characterised by**:
a wavelength selective device (124, 200, 302) for directing the light of the predetermined wavelength generated by the laser device (104, 106, 108, 110) to the target surface area (122).

2. A device as claimed in Claim 1, further comprising:
a first optical element (126) for collimating the light generated by the laser device (104, 106, 108, 110), the first optical element (126) being disposed between the laser (104, 106, 108, 110) device and the wavelength selective device (124); and
a second optical element (128) arranged to focus light propagating from the wavelength selective device (124) at the target surface area.

3. A device as claimed in Claim 1 or Claim 2, wherein the wavelength selective device is a diffraction grating (124).

4. A device as claimed in Claim 3, wherein the diffraction grating is concave.

5. A device as claimed in Claim 1 or Claim 2, wherein the wavelength selective device is a holographic micro-lens array.

6. An optoelectronic device (100) for generating and coupling light to a target surface area (122), the device comprising:
a laser device (104, 106, 108, 110) of an array of tunable laser devices (102), the laser device (104, 106, 108, 110) being arranged to generate light of a predetermined wavelength; and
a reflective device (402) for directing the light of the predetermined wavelength generated by the laser device (104, 106, 108, 110) to the target surface area (122);
**characterised in that** the laser device (104, 106, 108, 110) is electronically tunable.

7. A device as claimed in Claim 6, further comprising:
a first optical element (400) for focussing the light generated by the laser device (104, 106, 108, 110), the first optical element (400) being disposed between the laser device (104, 106, 108, 110) and the reflective device (402); and
a second optical element (406) arranged to focus light propagating from the reflective device (400) at the target surface area (122).

8. A method of generating and coupling light to a target surface area (122), the method comprising the steps of:
providing an array of tunable laser devices (102), at least one of the tunable laser devices (104, 106, 108, 110) of the array of tunable laser devices (102) generating light of a predetermined wavelength; **characterised by**:
wavelength selectively directing the light of the predetermined wavelength generated by the at least one tunable laser device (104, 106, 108, 110) to the target surface area (122).

9. A method of generating and coupling light to a target surface area (122), the method comprising the steps of:
providing an array of tunable laser devices (102), at least one of the tunable laser devices (104, 106, 108, 110) of the array of tunable laser devices (102) generating light of a predetermined wavelength; and
directing the light of the predetermined wavelength generated by the at least one tunable laser device (104, 106, 108, 110) to the target surface area (122); **characterised by**:
electronically tuning the at least one tunable laser device (104, 106, 108, 110).
